# EUROPÄISCHE PATENTSCHRIFT

(11) **EP 2 070 886 B1**
(45) Veröffentlichungstag und Bekanntmachung des Hinweises auf die Patenterteilung: **29.04.2015**
(21) Anmeldenummer: 08020935.6
(22) Anmeldetag: 03.12.2008
(51) Int. Cl.: C03C 27/06, C03C 8/24, C03C 27/10

(54) **Verfahren zum Verbinden von Bauteilen aus hochkieselsäurehaltigen Werkstoffen**
Method for connecting components made of materials with high silica content
Procédé de liaison de composants à partir de matière première à forte teneur en silice

(30) Priorität: 14.12.2007 DE 102007060980
(43) Veröffentlichungstag der Anmeldung: 17.06.2009
(73) Patentinhaber: Heraeus Quarzglas GmbH & Co. KG, 63450 Hanau (DE)
(72) Erfinder: Werdecker, Waltraud, 63456 Hanau (DE); Weber, Jürgen, 63801 Kleinostheim (DE); Traeger, Norbert, 63477 Maintal (DE); Kara, Maximilian, 63906 Erlenbach (DE); Horn, Roland, Dr., 91564 Neuendettelsau (DE)
(74) Vertreter: Staudt, Armin Walter

(56) Entgegenhaltungen:
- GB-A- 803 369
- US-A- 5 653 777

## Beschreibung

Die Erfindung betrifft ein Verfahren zum Verbinden von Bauteilen aus hochkieselsäurehaltigem Werkstoff durch stoffschlüssiges Fügen, indem zwischen den Verbindungsflächen der Bauteile eine hochkieselsäurehaltige Verbindungsmasse ausgebildet wird.

Unter einem hochkieselsäurehaltigen Werkstoff wird hier dotiertes oder undotiertes Quarzglas mit einem SiO₂-Gehalt von mindestens 85 % verstanden. Dieser Werkstoff wird im Folgenden auch kurz als "Quarzglas" bezeichnet. Quarzglas zeichnet sich durch einen niedrigen thermischen Ausdehnungskoeffizienten, durch optische Transparenz über einen weiten Wellenlängenbereich sowie durch hohe chemische und thermische Beständigkeit aus.

Bauteile aus Quarzglas werden für eine Vielzahl von Anwendungen eingesetzt, die beispielsweise in der Lampenfertigung als Hüllrohre, Kolben, Abdeckplatten oder Reflektorträger für Lampen und Strahler im ultravioletten, infraroten und sichtbaren Spektralbereich, im chemischen Apparatebau oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfach Quarzglasbauteilen, wie Rohre, Stäbe, Platten, Flansche, Ringe oder Blöcke.

Zum Erzeugen besonderer Eigenschaften wird Quarzglas mit anderen Substanzen dotiert, wie etwa mit Titan, Aluminium, Bor oder Germanium.

Es stellt sich oft die Aufgabe, Quarzglaselemente miteinander zu verbinden, etwa für die Fertigung von Quarz-Bauteilen mit komplexer Form. In der Regel erfolgt diese Verbindung durch Verschweißen der Bauteile miteinander. In der EP 1 042 241 A1 ist beispielsweise ein Verfahren zum stoßweise Verschweißen von Quarzglasrohren beschrieben. Das Verschweißen beinhaltet ein Aufschmelzen der miteinander zu verbindenden Flächen und ein Anpressen der erweichten Flächen gegeneinander, so dass sich leicht eine unerwünschte plastische Verformung im Bereich der Schweißzone einstellt. Durch aufwendige Nachbearbeitung können derartige Verformungen zwar wieder beseitigt werden, wobei jedoch in der Regel Maßabweichungen bleiben.

Für die Herstellung von Präzisionsteilen, die aus mehreren Quarzglasteilen zusammengesetzt sind, wurden auch Fügetechniken vorgeschlagen, die Klebeverfahren unter Einsatz organischer Klebstoffmassen beinhalten, die jedoch nur geringen Temperaturen Stand halten.

Es sind auch Fügeverfahren mittels Glasloten bekannt, wie sie beispielsweise auch in DD 289 513 A5 beschrieben sind. Zum formstabilen und vakuumdichten Verbinden von Präzisionsbauteilen aus Quarzglas wird der Einsatz eines Glaslotes auf Blei-Zink-Borat-Basis vorgeschlagen. Aus dem Pulver des Glaslotes mit Teilchengrößen zwischen 1 µm und 70 µm wird eine azetonlösliche Paste hergestellt und diese auf einer Verbindungsfläche aufgetragen. Die zu verbindenden Teile (Rohr und Platte) werden zueinander fixiert und die Verbindungsflächen gegeneinander gepresst. Dieser Verbund wird in einen Lötofen eingebracht und durchläuft eine Temperaturbehandlung mit einer Maximaltemperatur von 450 °C und einer Dauer von 3,5 Stunden. Das Glaslot schmilzt dabei auf und wandelt sich gleichzeitig in eine kristalline Phase mit höherer Schmelztemperatur um. Die so hergestellte stoffschlüssige Fügeverbindung zeichnet sich - bis zu einer Temperatur von 500°C - durch eine geringe Vakuumleckrate aus. Den besonders hohen Anforderungen an die Temperaturfestigkeit und an die Temperaturwechselbeständigkeit, wie sie sich bei vielen wärmetechnischen Anwendungen von Quarzglas stellen, kann diese Fügeverbindung jedoch nicht genügen. Darüber hinaus erfüllt die bekannte Fügeverbindung auch Anforderungen an die Reinheit und Kontaminationsfreiheit, wie sie beispielsweise bei Anwendungen in der Halbleiterfertigung, der Optik, aber auch im Bereich der Chemie, Medizin, Forschung und Analysetechnik bestehen, nicht.

Es ist weiterhin aus DE 10 2004 054 392 A1 ein satzungsgemäßes Verfahren zum Verbinden von Bauteilen aus hochkieselsäurehaltigem Werkstoff bekannt, bei dem ein gießfähiger oder pastöser Schlicker, der amorphe SiO₂-Teilchen enthält, auf eine oder auf beide Verbindungsflächen aufgetragen wird, die sofort anschließend zueinander oder aufeinander fixiert werden. Danach erfolgt eine Trocknung der Verbindungsmasse, die mehr oder weniger zwischen den beiden Verbindungsflächen eingeschlossen ist. In einem Beispiel gemäß diesem Stand der Technik werden zwei Platten miteinander in dieser Art verbunden, wobei der SiO₂-haltige Schlicker durch einen Sprühvorgang auf die Unterseite der oberen Quarzglasplatte bzw. die Oberseite der unteren Quarzglasplatte aufgetragen wird. Sofort danach wird die obere Platte auf die untere Platte aufgelegt. Durch entsprechend langsames Trocknen wird eine rissfreie getrocknete Schicht erhalten, die zum Verbinden dieser beiden relativ kleinen Platten geeignet ist. Dieses Verfahren ist für großflächige Verbindungen mit einem entsprechend hohen Pressdruck allein schon durch das Eigengewicht der zu verbindenden Quarzglasteile nicht mehr geeignet, bzw. würde lange und unwirtschaftliche Trocknungszeiten erfordern, um das Dispersionsmittel der Verbindungsmasse aus der Fügestelle defektfrei zu entfernen.

Die US 5,653,777 A lehrt die Herstellung einer Kapillar-Spule für die Gaschromatographie. Dabei wird eine Quarzglaskapillare auf einem Spulenkern aus Quarzglas aufgewickelt und darauf fixiert. Zur Fixierung wird ein spezielles Sol-Gel vorgeschlagen, das gemäß dem Ausführungsbeispiel aus einer alkoholischen Lösung einer Mischung von SiO₂-Pulver mit einer Teilchengröße von weniger als 0,5 µm und zusätzlich aus Oxiden von Germanium und Phosphor besteht. Der Gewichtsanteil der Feststoffe kann bis zu 70 Gew-% betragen, vorzugsweise beträgt er 50 Gew.-%

Die GB 803,369 A lehrt ein anderes Verfahren zum Verbinden von Bauteilen aus Glas. Dabei wird ein Si02-haltiges Aquasol, das ein wasserlösliches, nicht-ionisches organisches Polymer in einer Menge bis zu 100 % des SiO₂ enthält auf eine Kontaktfläche zwischen den zu verbindenden Bauteilen eingebracht. Diese SiO₂-haltige Verbindungsmasse wird getrocknet, während die zu verbindenden Bauteile in Kontakt sind. Die mittlere Teilchengröße in dem SiO₂-haltigen Aquasol liegt bei weniger als 200 µm. Bei den zu verbindenden Bauteilen handelt es sich um Fensterglas, Glas für den chemischen Apparatebau oder Glasgeweben oder -fasern.

Der Erfindung liegt somit die Aufgabe zugrunde, ein Verfahren anzugeben, das eine kostengünstige Herstellung eines mechanisch und thermisch stabilen Verbundes von Bauteilen aus hochkieselsäurehaltigem Werkstoff ermöglicht, insbesondere für großflächige Fügeverbindungen, für die ein Anpressdruck beim Fixieren der Verbindungsflächen grösser 5 N/cm² aufgebracht wird und/oder die maximale Weglänge für eventuelle Ausgasprodukte aus der Fügeverbindung mehr als 150 mm beträgt.

Ausgehend von dem vorgenannten Verfahren wird diese Aufgabe erfindungsgemäß dadurch gelöst, dass die SiO₂-Verbindungsmasse in trockener Form eingesetzt wird und daran anschließend die zu verbindenden Flächen in Kontakt gebracht werden und durch Erhitzen unter Bildung einer SiO₂-haltigen Verbindungsmasse ein fester Verbund entsteht, wobei für die Verbindungsmasse entweder eine trockene Quarzglaskörnung oder/und ein Quarzglasgranulat mit einer mittlere Teilchengröße im Bereich zwischen 10 µm und 40 µm eingesetzt wird.

Beim erfindungsgemäßen Verfahren beruht die Verbindung der Bauteile auf einer SiO₂-haltigen Verbindungsmasse, die bevor die Verbindungsflächen miteinander in Kontakt gebracht werden, bereits von Anfang an in trockener Form vorliegt. Eine Möglichkeit für großflächige Fügeverbindungen von Quarzglasteilen mit einer hochkieselsäurehaltigen Verbindungsmasse besteht darin, dass die Verbindungsmasse nicht in gießfähiger oder pastöser Form aufgetragen wird, sondern bereits in trockener oder vorgetrockneter Form, beispielweise in Form einer Pulverschicht aus amorphen SiO₂-Partikeln, die auf die Verbindungsflächen aufgetragen und gegebenenfalls angedrückt werden. Darüber hinaus kann auch eine zuvor aus einem SiO₂-Schlicker hergestellte und vorgetrocknete Grünfolie als Verbindungsmasse auf die zu verbindenden Flächen der Quarzglasbauteile aufgetragen bzw. konkret auflaminiert werden.

Zum Verfestigen und Verdichten der trockenen Verbindungsmasse auf den zu verbindenden Quarzglasbauteilen werden diese miteinander in Kontakt gebracht und dann auf eine Temperatur erhitzt, die zu einem Sintern oder Schmelzen der amorphen SiO₂-Teilchen unter Ausbildung einer rissfreien SiO₂-haltigen Verbindungsmasse führt, die aus opakem, teils opakem oder teils transparentem oder vollständig transparentem, hochkieselsäurehaltigem Glas besteht.

Beim Sintern oder Verglasen der trockenen Verbindungsmasse gilt es, eine Kristallisation in der SiO₂-haltigen Verbindungsmasse, welche zu einer Schwächung der Fügeverbindung führen würde, zu vermeiden oder zumindest zu minimieren. In diesem Zusammenhang ist es ebenfalls wichtig, dass für die Bildung der Verbindungsmasse verwendeten SiO₂-Teilchen amorph sind. Sie bestehen aus synthetisch hergestelltem SiO₂ oder sie sind auf Basis von gereinigtem natürlich vorkommenden Rohstoff herstellt.

Weiterhin ist darauf zu achten, dass eine stabile SiO₂-haltige Verbindungsmasse erzeugt wird, die auch bei Temperaturwechseln eine stabile und sichere Verbindung zwischen den großflächigen Bauteilen gewährleistet. Hierbei liegt ein besonderes Augenmerk auf dem thermischen Ausdehnungskoeffizienten der SiO₂-haltigen Verbindungsmasse und dessen Temperaturabhängigkeit im Vergleich zu dem oder den thermischen Ausdehnungskoeffizienten der verbindenden Bauteile.

In dem Zusammenhang spielt die in Bezug auf den hochkieselsäurehaltigen Werkstoff "Arteigenheit" der SiO₂-haltigen Verbindungsmasse eine wichtige Rolle. Darunter verstehen wir, dass sich der SiO₂-Gehalt der Verbindungsmasse jeweils von denjenigen, der zu verbindenden hochkieselsäurehaltigen Bauteile um maximal 3 Gew.% unterscheidet. Durch die Verwendung von "arteigenem Material" für die Ausbildung der Verbindungsmasse wird zum einen eine möglichst weitgehende Annährung der thermischen Ausdehnungskoeffizienten zwischen dem Quarzglas der Bauteile und der Verbindungsmasse ermöglicht, und damit einhergehend eine besonders gute Haftung der verfestigten SiO₂-haltigen Verbindungsmasse an den Verbindungsflächen und andererseits auch eine hohe Temperaturwechselbeständigkeit dieses Verbundes erreicht. Weiterhin werden Kontaminationen des Quarzglases der miteinander verbundenen Bauteile oder deren Einsatzumgebung durch Fremdstoffe aus dem arteigenen Material vermieden.

Rauhigkeiten und Unebenheiten der Verbindungsflächen wirken sich beim erfindungsgemäßen Verfahren nicht zwangsläufig nachteilig aus. Im Gegenteil, durch eine gewisse Oberflächenrauhigkeit kann die Haftung der trockenen SiO₂-haltigen Verbindungsmasse sogar verbessert werden.

Zusammenfassend muss festgestellt werden, dass dadurch das bei dem erfindungsgemäßen Verbindungsverfahren die zu verbindenden Quarzglasteile erst nachdem die Verbindungsmasse getrocknet ist miteinander in Kontakt gebracht werden, ist das Verfahren für großflächige Verbindungen, bei denen ein Anpressdruck beim Fixieren der Verbindungsflächen grösser 5 N/cm² ist und/oder die maximale Weglänge für eventuelle Ausgasprodukte aus der Fügeverbindung mehr als 150 mm beträgt, geeignet. Die Trocknungszeiten sind zudem kurz, so dass das Verfahren kostengünstig ist.

Die Verbindungsmasse wird durch ein trocknes Pulver gebildet. Als Verbindungsmasse werden dabei eine trockene Quarzglaskörnung oder/und ein Quarzglasgranulat eingesetzt.

Amorphe SiO₂-Teilchen in Form poröser Granulatteilchen liegen als Agglomerate nanoskaliger, amorpher synthetisch erzeugter SiO₂-Primärteilchen mit einer mittleren Primärteilchengröße von weniger als 100 nm vor.

Derartige Primärteilchen werden durch Flammenhydrolyse oder Oxidation von Silizium-Verbindungen erhalten. Beim Granulieren bilden sich durch Zusammenlagerung der feinteiligen SiO₂-Primärteilchen die gröberen Granulatteilchen aus. Dadurch setzt bereits in der Verbindungsmasse eine das spätere Sintern und Verglasen vergünstigende Verdichtung und Verfestigung ein, die auf einer gewissen Löslichkeit und Beweglichkeit einzelner Primärteilchen in der Verbindungsmasse beruht, die zur sogenannten "Halsbildung" zwischen benachbarten amorphen SiO₂-Teilchen in der Verbindungsmasse beiträgt. Beim Trocknen der mit SiO₂ angereicherten Verbindungsmasse mit einer Flüssigphase im Bereich der "Hälse" verfestigen sich diese und führen zu einer festen Verbindung zwischen den einzelnen amorphen SiO₂-Teilchen und zu einer Verdichtung und Verfestigung der Verbindungsmasse, die das nachfolgende Sintern erleichtern. Die Porosität der Granulate und die damit einhergehende hohe spezifische Oberfläche bewirkt eine hohe Sinteraktivität.

Nanoskalige SiO₂-Pulver zeigen gute Fließeigenschaften, so dass der gleichmäßige Auftrag auf einen ebene Fläche eines Quarzglasbauteils durchaus gewährleistet ist.

Die mittleren Teilchengrößen für diese trocken eingesetzten Quarzglaskörnungen oder Quarzglasgranulate als Verbindungsmassen liegen im Bereich von 10 µm und 40 µm.

Anschließend kann unter Wegfall einer Trocknungsperiode das anzufügende Quarzglasbauteil aufgebracht werden. Diese Maßnahme ist insbesondere vorteilhaft, wenn ein sehr großer Flächenverbund mit einer relativ dicken Fügemasse erforderlich ist und das Entfernen etwaiger Dispersionsmittel aus der Verbindungsmasse zu lange dauert oder aus anderen Gründen unwirtschaftlich ist.

Vorteilhafte Ausgestaltungen des Verfahrens finden sich in den Unteransprüchen.

Vorzugsweise beträgt der SiO₂-Gehalt der amorphen SiO₂-Teilchen mindestens 99,9 Gew.%.

Insoweit handelt es sich für einen Bauteilverbund aus undotiertem Quarzglas um ein arteigenes Ausgangsmaterial.

Es kann darüber hinaus vorteilhaft sein, dass die Verbindungsmasse eine zusätzliche Zwischenschicht umfasst, die durch Aufstreuen von Quarzglaskörnung oder/und Quarzglasgranulat auf eine bereits auf den Verbindungsflächen befindliche Verbindungsmasse aufgetragen wird, die ein Dispergiermittel enthält. In der Regel wird eine solche erste Verbindungsmasse mit Dispergiermittel in Form einer siebdruckfähigen Paste eingesetzt, da mit der Siebdrucktechnik, gleichmäßige, dünne, großflächige Schichten kostengünstig und reproduzierbar appliziert werden können. Es ist auch denkbar die Reihenfolge umzukehren, also zunächst ein SiO₂-Pulver auf die Fügefläche aufzutragen und anschließend eine SiO₂-Verbindungsmasse, die ein Dispergiermittel enthält, aufzutragen. Das Dispergiermittel muss während einer Trocknung, bevor die zu fügende Teile in Kontakt kommen, entfernt werden. Hierbei kann die anschließend (oder vorher) aufgetragene Pulverschicht erhöht den Füllgrad den Füllgrad der Verbindungsmasse und die Trocknungszeit insgesamt verkürzt sich.

In einer bevorzugten Verfahrensvariante umfasst das Verfestigen der Verbindungsmasse ein Sintern unter Bildung einer mindestens teilweise opaken Verbindungsmasse.

Das Sintern erfordert - im Vergleich zu Verglasen bis zu vollständigen Transparenz - vergleichsweise niedrigen Sintertemperaturen und/oder kurze Sinterzeiten. Dies begünstigt die Einhaltung der Maßhaltigkeit des herzustellenden Bauteilverbundes, verringert den Energiebedarf und vermeidet thermische Beeinträchtigungen der zu verbindenden Bauteile und eine Kristallisation im Bereich der Verbindungsmasse.

Es hat sich gezeigt, dass für die meisten Anwendungen bereits durch Sintern (und nicht nur durch ein vollständiges Verglasen) eine ausreichende mechanische Festigkeit der SiO₂-haltigen Verbindungsmasse erzeugt werden kann.

Der Verdichtungsgrad hängt von der Sintertemperatur und der Sinterdauer ab. Je höher die Temperatur ist, umso kürzer kann die Sinterdauer sein und umgekehrt. Eine übliche und bevorzugte Temperaturbehandlung zum Sintern der Schlickermasse umfasst ein Erhitzen bei einer Temperatur im Bereich zwischen 800°C und 1450°C bevorzugt bei einer Temperatur unterhalb von 1300°C.

Im einfachsten Fall wird das Sintern in einem Sinterofen durchgeführt, in den die zu verbindenden Bauteile eingebracht werden. Das gleichmäßige Erwärmen des gesamten Bauteilverbundes in einem Sinterofen vermindert die Ausbildung von Spannungen und vermeidet Verformungen des Verbundes. Bei einer weiteren bevorzugten Verfahrensvariante umfasst das Verfestigen der Verbindungsmasse ein Verglasen unter Bildung einer mindestens teilweise transparenten, verfestigten SiO₂-haltigen Verbindungsmasse.

Ein vollständiges Verglasen der SiO₂-haltigen Verbindungsmasse wird bevorzugt, wenn besonders hohe Anforderungen an die Dichtheit, Festigkeit, Partikelfreiheit und ähnliche Beständigkeit des Verbundes gestellt werden, wenn eine optische Transparenz in dem Bereich technisch erforderlich ist oder aus rein ästhetischen Gründen. Die SiO₂-haltige Verbindungsmasse ist in dem Fall porenfrei oder porenarm und sie weist eine hohe Dichte auf, die etwa derjenigen der kieselsäurehaltigen Bauteile entspricht.

In der Regel genügt aber ein Verglasen oberflächennaher Bereiche der SiO₂-haltigen Verbindungsmasse. Sofern diese verglasten Bereiche die Verbindungsflächen miteinander verbinden, tragen sie zu einer höheren mechanischen Festigkeit und auch zur Dichtheit des Verbundes bei, auch wenn die SiO₂-haltige Verbindungsmasse ansonsten porenhaltig und opak ist.

Das Verglasen erfolgt bevorzugt unter Einsatz einer Heizquelle, deren maximale Heizwirkung örtlich auf die Verbindungsmasse begrenzbar ist.

Die Wirkung der zum Verglasen erforderlichen hohen Temperaturen kann hierbei lokal auf die zu verglasende Verbindungsmasse begrenzt und plastische Verformungen dadurch vermieden oder vermindert werden. Zu diesem Zweck werden bevorzugt Brenner oder Infrator-Laser (z. B. SiO₂-Laser) eingesetzt.

Im Fall eines vorangegangenen Sinterschrittes wird vorteilhafter Weise die Restwärme genutzt und der noch heiße Bauteilverbund verglast. Dies trägt zur Energieeinsparung bei und die Ausbildung von Spannungen wird verhindert.

Bei einer weiteren bevorzugten Verfahrensvariante zur Lösung des oben genannten Problems hinsichtlich des thermischen Ausdehnungskoeffizienten der SiO₂-haltigen Verbindungsmasse wird eine Masse eingesetzt, die einen oder mehrere der folgenden Dotierstoffe enthält: Al₂O₃, TiO₂, Y₂O₃, AIN, Si₃N₄, ZrO₂, BN, HfO₂, Si, Yb₂O₃ und/oder SiC. Durch Zugabe eines oder mehrerer der genannten Dotierstoffe ist der thermische Ausdehnungskoeffizient der SiO₂-haltigen Verbindungsmasse an denjenigen oder diejenige der zu verbindenden Bauteile anpassbar. Vorzugsweise erfolgt die Dotierung mit einem Dotierstoff so, dass die Ausbildung einer kristallinen Phase in der SiO₂-haltigen Verbindungsmasse vermieden wird.

Nachfolgend wird die Erfindung anhand von Ausführungsbeispielen und einer Zeichnung erläutert.

Im Einzelnen zeigen in schematischer Darstellung:

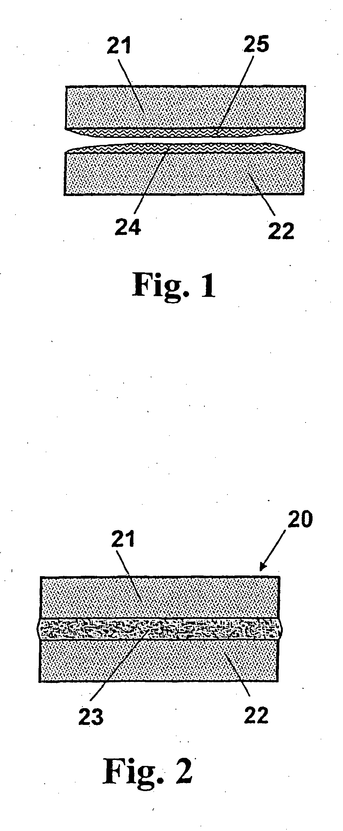

**Figur 1****:** das Fügen zweier Quarzglas-Platten nach dem erfindungsgemäßen Verfahren
**Figur 2****:** den erhaltenen Bauteilverbund nach dem Verfahrensschritt gemäß Figur 1

Die Fügetechnik im Sinne der vorliegenden Erfindung besteht darin, dass als Verbindungsmasse kein Schlicker auf die zu verbindenden Quarzglasbauteile aufgebracht wird, sondern eine trockene körnige Quarzglasschicht. Diese Körnung wird möglichst gleichmäßig auf einer ebenen Fügefläche ausgebreitet, beispielsweise unter Zuhilfenahme eines Rakels. Monomodale sphärische Quarzglaskömungen mit einem D50-Wert zwischen 5 und 40 µm sind besonders gut geeignet. Aber auch Granulate, die aus nanoskaligen SiO₂-Pulvern aufgebaut sind, sind hierfür gut einsetzbar. Dadurch dass die lose Körnung als Verbindungsmasse für das Verbundbauteil kein Fixiermittel enthält, wird nur die untere Quarzglasplatte 22 mit der Pulverschicht belegt, wobei die Dicke dieser Verbindungsmasse im Bereich zwischen 0,5 mm und mehreren Millimetem liegt, je nachdem welche Gesamtgeometrie des Bauteilverbundes erreicht werden soll. Besonders vorteilhaft bei dieser Ausführungsform ist, dass auf einen Trocknungsschritt gänzlich verzichtet werden kann und die obere Quarzglas-Platte 21 sofort nach dem Pulverauftrag auf der Unterplatte auf diese aufgelegt werden kann. Je nach eingesetztem Kornspektrum der Verbindungsmasse 23 als Körnungsschicht wird das "Plattensandwich" bei einer Sintertemperatur zwischen 1200°C und 1450°C in einem Sinterofen gesintert. In vorliegendem Beispiel bestehen die Platten 21 und 22 aus transparentem Quarzglas und sind kreisrund mit einem Durchmesser von 300 mm und einer Dicke von je 2,5 mm. Durch das Eigengewicht der Oberplatte 21 von etwa 388,80g hat die Oberplatte einen Anpressdruck von 5,5 N/cm² auf die Unterplatte 22 mit der aufgestreuten Körnung als Verbindungsmasse 24. Würden in diesem Fall eine Verbindungsmasse mit evaporierendem Dispergiermittel eingesetzt und die Verbindungsflächen sofort nach Auftragen dieser Masse aufeinander gelegt, so wäre kein gleichmäßiges Trocknen der Verbindungsmasse 24 zu erzielen. Die Ausgasprodukte aus der Mitte der kreisrunden Platten 21, 22 müssten die Ausgasprodukte eine Weglänge bis zum Plattenrand von 150 mm zurücklegen, was ein fehlerfreies Ausgasen nicht erwarten lassen würde.

Als Verbindungsmasse 24 wird eine SiO₂-Pulverschicht auf die Oberseite der Platte 22 aufgebracht, wobei durch ein sanftes Vibrieren der Platte 22 die Körnungsschicht gleichmäßig auf der Plattenoberfläche verteilt wird. Als Pulver wird die Quarzglaskörnung Excelica® SE 15 Körnung der Firma Tokuyama Ltd. eingesetzt, die sphärische SiO₂-Partikel mit einer mittleren Teilchengröße von 15 µm aufweist. Das Sinterprogramm für diesen Verbund hat eine Aufheizrate von 2,5 °C/Minute von etwa Raumtemperatur auf 1400°C. Die Haltezeit bei 1400°C beträgt 3 Stunden. In diesem Fall wird trotz relativ hoher Sintertemperatur keine transparente Zwischenschicht erzeugt, da bei der losen Quarzglaskörnung der Partikelabstand dennoch zu groß ist um ein porenfreies Dichtsintern zu erreichen. Der so hergestellte plattenförmige Verbundkörper 20 mit einer opaken Zwischenschicht 23 wird im Sinterofen langsam abgekühlt, wobei eine erste Abkühlrampe bei 5 °C pro Minute liegt und bei einer Ofentemperatur von 1050°C liegt. Die zweite Abkühlrampe liegt bei 10°C pro Minute und endet bei einer Ofentemperatur von 950°C. Danach erfolgt das weitere Abkühlen ungeregelt bei geschlossenem Ofen. Durch das relativ langsame Abkühlen wird der Bauteilverbund getempert, so dass vorhandene mechanische Spannungen abgebaut und die Ausbildung von Spannungen durch das Abkühlen vermieden wird. Diese kreisrunden Platten mit opaker Zwischenschicht 23 werden beispielsweise als Reflektorplatten in der Halbleiterindustrie eingesetzt und zwar in Heißbereichen, die überdies eine porenfreie Oberfläche verlangen.

Bei einem weiteren erfindungsgemäßen Ausführungsbeispiel wird zunächst als Verbindungsmasse eine sehr dünne Schicht einer SiO₂-Grundschlickers auf die Oberseite der Unterplatte 21 bzw. die Unterseite der Oberplatte 22 aufgetragen. Die Schicht wird mittels Siebdruck aufgetragen und hat eine Schichtdicke im Bereich von etwa 30 µm bis 100 µm. Auf die noch feuchte Siebdruckschicht wird eine trockene Quarzglaskörnung aufgestreut, wodurch die einzelnen Partikel durch die mittels Siebdruck aufgebrachte noch feuchte SiO₂-Schicht fixiert werden. Als Quarzglaskörnung kann das oben erwähnte SiO₂-Pulver Excelica^{®} SE 15 eingesetzt werden oder auch eine Kombination mehrerer Kornfraktionen ähnlicher Pulverqualitäten wie zum Beispiel auch Excelica^{®} SE 30, das eine mittlere Teilchengröße von 30 µm aufweist. Anschließend werden die so präparierten Platten 21 und 22 mit der Verbindungsmasse 23, 24 getrocknet, wobei die Trocknungsdauer hier kurz gehalten werden kann, da ja nur sehr wenig Dispergiermittel aus der Siebdruckschicht entfernt werden muss. Die Trocknungsdauer beträgt maximal etwa 30 Minuten und wird in einem Trockenschrank an Luft bei etwa 120°C durchgeführt.

Danach werden die Platten aufeinandergelegt, wobei die Seiten der Platten mit der Verbindungsmasse in Kontakt kommen und schließlich mit einem Sinterprogramm wie oben beschrieben gesintert. Als Ergebnis auch dieser Verfahrensvariante erhält man einen Verbundkörper 20, der eine opake Zwischenschicht 23 aufweist und vorzugsweise als Reflektorbauteil in der Halbleiterindustrie bei Heißprozessen eingesetzt wird.

## Patentansprüche

1. Verfahren zum Verbinden von Bauteilen aus hochkieselsäurehaltigem Werkstoff durch stoffschlüssiges Fügen, indem zwischen den Verbindungsflächen der Bauteile eine hochkieselsäurehaltige Verbindungsmasse ausgebildet wird, wobei die hochkieselsäurehaltige Verbindungsmasse in trockener Form eingesetzt wird und daran anschließend die zu verbindenden Flächen in Kontakt gebracht werden und durch Erhitzen unter Bildung einer SiO₂-haltigen Verbindungsmasse ein fester Verbund entsteht, wobei für die Verbindungsmasse entweder eine trockene Quarzglaskörnung oder/und ein Quarzglasgranulat mit einer mittlere Teilchengröße im Bereich zwischen 10 µm und 40 µm eingesetzt wird

2. Verfahren nach Anspruch 1, **dadurch gekennzeichnet, dass** der SiO₂-Gehalt der amorphen SiO₂-Teilchen in der Verbindungsmasse mindestens 99,9 Gew.% beträgt.

3. Verfahren nach einem der vorhergehenden Ansprüche, **dadurch gekennzeichnet, dass** die Verbindungsmasse eine zusätzliche Zwischenschicht umfasst, die durch Aufstreuen von Quarzglaskörnung oder/und Quarzglasgranulat auf eine bereits auf den Verbindungsflächen befindliche Verbindungsmasse aufgetragen wird.

4. Verfahren nach einem der vorhergehenden Ansprüche, **dadurch gekennzeichnet, dass** das Sintern eine Temperaturbehandlung der trockenen Verbindungsmasse bei einer Temperatur im Bereich zwischen 800 °C und 1450°C umfasst.

5. Verfahren nach Anspruch 4, **dadurch gekennzeichnet, dass** das Verfestigen ein Sintern der trockenen Verbindungsmasse unter Bildung einer mindestens teilweise opaken, verfestigten Verbindungsmasse umfasst.

6. Verfahren nach einem der vorhergehenden Ansprüche, **dadurch gekennzeichnet, dass** die Verbindungsmasse einen oder mehrere Dotierstoffe in Form von Al₂O₃, TiO₂, Y₂O₃, AlN, Si₃N₄, ZrO₂, BN, HfO₂, Si, Yb₂O₃ und/oder SiC enthält.

## Claims

1. A method for bonding components made of high silica material by a joining process including forming a high-silica bonding mass between connecting surfaces of the components, wherein the high-silica bonding mass is in dry form when introduced between the connecting surfaces and the surfaces to be bonded are subsequently brought into contact and a firm composite is created by heating so as to form a SiO₂ containing bonding mass, whereby a dry quartz glass grain or/and a quartz glass granulate having a mean particle size between 10 µm and 40 µm is used as the high-silica bonding mass.

2. The method according to claim 1, **characterized in that** the SiO₂ content of the amorphous SiO₂ particles in the high-silica bonding mass is at least 99.9% by wt.

3. The method according to any of the preceding claims, **characterized in that** the high-silica bonding mass comprises an additional intermediate layer that is applied by spreading quartz glass grain or/and quartz glass granulate over a first bonding mass already positioned on the connecting surfaces.

4. The method according to any of the preceding claims, **characterized in that** the sintering process comprises a temperature treatment of the dry high-silica bonding mass at a temperature between 800 °C. and 1450 °C.

5. The method according to claim 4, **characterized in that** the method further comprises solidifying the high-silica bonding mass by said sintering of the dry high-silica bonding mass so as to form an at least partly opaque solidified bonding mass.

6. The method according to any of the preceding claims, **characterized in that** the high-silica bonding mass contains one or more dopants selected from the group consisting of Al₂O₃, TiO₂, Y₂O₃, AlN, Si₃N₄, ZrO₂, BN, HfO₂, Si, Yb₂O₃, and/or SiC.

## Revendications

1. Procédé pour relier des composants à forte teneur en silice par cohésion de matière dans le fait qu'il est formé entre les surfaces de liaison des composants une masse de liaison à haute teneur en silice, la masse de liaison à haute teneur en silice étant insérée dans un moule sec et étant amenée ensuite en contact avec les surfaces à relier, et un composite solide étant obtenu par chauffage pour former une masse à haute teneur en silice, un granulat de quartz sec et/ou granulat de verre de quartz avec une granulométrie comprise entre 10 µm et 40 µm étant utilisé pour la masse de liaison.

2. Procédé selon la revendication 1, **caractérisé en ce que** la teneur en SiO₂ de particules de SiO₂ amorphes est d'environ 99,9.% en poids.

3. Procédé selon l'une des revendications précédentes, **caractérisé en ce que** la masse de liaison comprend une couche intermédiaire supplémentaire qui est appliquée par pulvérisation de granulés de verre de quartz sur une masse de liaison se trouvant déjà sur les surfaces de liaison.

4. Procédé selon la revendication 1, **caractérisé en ce que** le frittage comprend un traitement thermique de la masse de traitement à une température comprise entre 800° et 1450°C.

5. Procédé selon la revendication 4, **caractérisé en ce que** la solidification comprend un frittage de la masse de liaison sèche par la formation d'une masse de liaison solidifiée, opaque au moins partiellement.

6. Procédé selon l'une des revendications précédentes, **caractérisé en ce que** la masse de liaison contient un ou plusieurs dopants sous forme de Al₂O₃, TiO₂, Y₂O₃, AlN, Si₃N₄, ZrO₂, BN, HfO₂, Si, Yb₂O₃ et/ou SiC.
